# EUROPÄISCHE PATENTSCHRIFT

(11) **EP 3 138 799 B1**
(45) Veröffentlichungstag und Bekanntmachung des Hinweises auf die Patenterteilung: **19.08.2020**
(21) Anmeldenummer: 15183927.1
(22) Anmeldetag: 04.09.2015
(51) Int. Cl.: B65H 75/40, B65H 75/44, H02G 11/02

(54) **LEITUNGSROLLER**
CABLE REEL
ENROULEUR DE CABLES

(43) Veröffentlichungstag der Anmeldung: 08.03.2017
(73) Patentinhaber: Hugo Brennenstuhl GmbH & Co. Kommanditgesellschaft, 72074 Tübingen (DE)
(72) Erfinder: Brennenstuhl, Hugo, 72074 Tübingen (DE)
(74) Vertreter: Patentanwälte Magenbauer & Kollegen Partnerschaft mbB

(56) Entgegenhaltungen:
- WO-A1-2013/187964
- WO-A2-2010/023527
- DE-A1- 3 902 268
- DE-U- 7 331 183
- DE-U1- 29 913 764
- DE-U1-202010 013 009
- GB-A- 2 469 460
- US-A- 4 338 497
- US-A- 4 653 833
- US-A- 5 598 985

## Beschreibung

Die Erfindung betrifft einen Leitungsroller, insbesondere Kabeltrommel mit einer ersten Leitungsroller-Stirnseite und einer dieser entgegengesetzten zweiten Leitungsroller-Stirnseite, und mit einem Trommelträger zum Aufwickeln einer flexiblen Leitung, insbesondere Kabel.

Derartige Leitungsroller, insbesondere Kabeltrommeln, sind bereits seit langem bekannt. So offenbart beispielsweise die EP 1 760 024 einen Leitungsroller in Form einer Kabeltrommel, mit einem Trommelträger in Form eines Standgestells, das aus einem einzelnen Rohr gebogen ist und sowohl die Trommelachse als auch einen Handgriff zum Tragen des Leitungsrollers zur Verfügung stellt. Der Trommelkörper der Kabeltrommel besitzt einen Trommelzylinder und zwei jeweils endseitig an den Trommelzylinder angesetzte Trommelscheiben mit gegenüber dem Trommelzylinder beziehungsweise Trommelkern größerem Durchmesser. Zwischen den beiden Trommelscheiben ist ein Wickelraum zum Aufwickeln einer flexiblen Leitung, insbesondere eines Kabels ausgebildet. An der vorderen Trommelscheibe ist eine Steckdosenplatte mit mehreren Steckdosen zum Anschluss von elektrischen Verbrauchern angeordnet. An der rückseitigen Trommelscheibe mündet das Gestell in den Trommelkern und bildet dort mit einem Abschnitt das Drehlager für den Trommelkörper.

Ferner sind aus einem druckschriftlich nicht verfügbaren Stand der Technik sogenannte Kabelboxen bekannt, bei denen eine Trommel in einem peripher geschlossenen Trommelgehäuse aufgenommen und dort drehbar gelagert ist. Das Kabel wird durch eine seitliche Schlitzöffnung aus dem Trommelgehäuse herausgeführt. Die mit der Steckdosenplatte ausgestattete Trommelkörper-Stirnseite ist über eine Öffnung im Gehäuse zugänglich. Jedoch sind solche Kabelboxen bei rauen Umgebungsbedingungen, wie sie insbesondere auf Baustellen vorherrschen, nur bedingt einsetzbar, da die Kabelbox flach auf den Untergrund abzulegen ist und auch das Trommelgehäuse nicht ausreichend vor Beschädigungen geschützt ist.

Die US 4 338 497 A offenbart einen Leitungsroller gemäß dem Oberbegriff des Anspruchs 1.

Aufgabe ist es daher, einen Leitungsroller der eingangs erwähnten Art zu schaffen, die auch bei widrigen Umgebungsbedingungen funktionssicher einsetzbar ist und gegenüber herkömmlichen Leitungsrollern eine größere Funktionalität aufweist.

Diese Aufgabe wird durch einen Leitungsroller mit den Merkmalen des unabhängigen Anspruchs 1 gelöst. Weiterbildungen der Erfindung sind in den Unteransprüchen dargestellt.

Erfindungsgemäß ist ein Leitungsroller, insbesondre Kabeltrommel, vorgesehen, mit einer ersten Leitungsroller-Stirnseite und einer dieser entgegengesetzten zweiten Leitungsroller-Stirnseite und mit einem Trommelträger, der eine vordere und eine hintere Abschlusswand aufweist, die polygonförmig konturiert sind und einen Aufnahmeraum begrenzen, in dem eine Trommelträger zum Aufwickeln einer flexiblen Leitung, insbesondere Kabel, aufgenommen ist, wobei sich in den Aufnahmeraum ein Lagerkörper hinein erstreckt, auf den der Trommelkörper drehbar gelagert ist und der an wenigstens einer der Abschlusswände befestigt ist, und wobei einer der beiden Abschlusswände ein einen Zugriff zur Drehbetätigung des Trommelkörpers gestattende Wandöffnung aufweist.

Die beiden im Abstand zueinander ausgerichtete und den Aufnahmeraum begrenzende, polygonförmige Abschlusswände, lassen sich als Ersatz für ein Standgestell eines herkömmlichen Leitungsrollers einsetzen, das heißt der Leitungsroller lässt sich auf den Abschlusswänden abstellen. Es ist also nicht notwendig, den Leitungsroller flach auf den Untergrund abzulegen, wie es beispielsweise bei den Kabelboxen aus dem Stand der Technik notwendig ist. Ferner schützen die beiden Abschlusswände des Trommelträgers den Trommelkörper vor Beschädigung, insbesondere Stößen, Schlägen oder Aufprall anderer Gegenstände, wie es beispielsweise bei widrigen Umgebungsbedingungen, insbesondere auf Baustellen vorkommen kann.

Bei einer Weiterbildung der Erfindung ist die hintere Abschlusswand des Trommelkörpers geschlossen. Dadurch wird an der hinteren Abschlusswand ein vollflächiger Schutz des Trommelkörpers vor Beschädigung geschaffen.

In besonders bevorzugter Weise ist der Lagerkörper zur Lagerung des Trommelkörpers an der hinteren Abschlusswand befestigt. Es ist möglich, dass der Lagerkörper ein von der hinteren Abschlusswand separates Bauteil ist oder einstückig mit der hinteren Abschlusswand ausgebildet ist, beispielsweise an die hintere Abschlusswand angeformt ist.

Der Trommelträger mit den beiden Abschlusswänden besteht zweckmäßigerweise aus Kunststoffmaterial. Bei dem Kunststoffmaterial handelt es sich vorzugsweise um schlagfesten Kunststoff, der gegebenenfalls faserverstärkt sein kann.

Bei einer Weiterbildung der Erfindung weist die vordere Abschlusswand die Wandöffnung zur Gestattung des Zugriffs zur Drehbetätigung auf. Zweckmäßigerweise ragt wenigstens ein Drehgriff aus der Wandöffnung hervor, der von der ersten Leitungsroller-Stirnseite aus gegriffen werden kann.

Der Aufnahmeraum für die Aufnahme des Trommelkörpers ist in Umfangsrichtung beziehungsweise peripher um die Trommelachse partiell offen. Dadurch lässt sich trotz der Einhausung beziehungsweise des gehäuseartigen Trommelträgers von allen Seiten her auf den Trommelkörper zugreifen.

Erfindungsgemäß sind die beiden Abschlusswände durch mehrere in Umfangsrichtung der Trommelachse verteilt angeordnete Verbindungsstreben miteinander verbunden. Die Verbindungsstreben lassen sich beispielsweise einerseits an der einen Abschlusswand und andererseits an der anderen Abschlusswand befestigen. Die Befestigung der Verbindungsstreben erfolgt zweckmäßiger von den jeweiligen Außenseiten der Abschlusswände her. Hierzu können in den Abschlusswänden Montagelöcher vorgesehen sein, über die sich Befestigungsmittel in Eingriff mit den Verbindungsstreben bringen lassen, wodurch die Verbindungsstreben an den Abschlusswänden befestigt werden.

Erfindungsgemäß bilden in Umfangsrichtung zueinander benachbarte Verbindungsstreben und zugeordnete Randbereiche der Abschlusswände fensterartige Zugriffsöffnungen. Es ist also möglich, die flexible Leitung, insbesondere das Kabel über jede der fensterartigen Zugriffsöffnungen auf- oder abzuwickeln.

Es ist möglich, dass die sich zwischen benachbarten Verbindungsstreben erstreckenden Randbereiche gleich lang sind.

Die polygonförmige Ausgestaltung der Abschlusswände kann beispielsweise rechteckig, insbesondere quadratisch, dreieckig, fünfeckig, sechseckig etc. ausgeführt sein. Bei bevorzugt gleich langen Randbereichen können die Abschlusswände also die Form eines Quadrats, gleichseitiges Dreieck, regelmäßig Fünf- oder Sechsecke aufweisen.

In besonders bevorzugter Weise bilden die Randbereiche bezüglich der Verbindungsstreben quer zur Trommelachse vorstehende Abstellflächen. Der Leitungsroller kann also auf diesen Abstellflächen abgestellt werden. Da die beiden Abschlusswände einen Abstand zueinander aufweisen, der größer ist als der zwischen zwei Trommelscheiben des Trommelkörpers ausgebildete Wickelraum, lässt sich der Leitungsroller aufgrund der dadurch entstehenden relativ großflächigen Abstellflächen standsicher abstellen. Ferner gibt es keine bevorzugte Abstellfläche, da die Abstellflächen in Umfangsrichtung der Trommelachse rundum angeordnet sind. Es ist also egal auf welche Abstellfläche der Leitungsroller abgestellt ist, seine Funktion ist hiervon nicht beeinträchtigt.

Ferner lässt sich der gehäuseartige Trommelkörper auch funktionell für weitere Aufgaben nutzen. Beispielsweise ist der als Hocker oder Montageunterlage nutzbar. Am Trommelträger können beispielsweise auch Rollen angebracht werden, wodurch sich der gesamte Leitungsroller verfahren lässt.

In besonders bevorzugter Weise weisen die Verbindungstreben jeweils eine Gleitfläche zur Führung der flexiblen Leitung beim Aufwickeln auf den Trommelkörper auf. Zweckmäßigerweise sind die Abschlusswände an ihren Ecken mit Verbindungstreben miteinander verbunden. Daher ist es gleich, welche Zugriffsöffnung für das Auf- und Abwickeln der flexiblen Leitung verwendet wird, es steht stets eine Gleitfläche an einer Verbindungsstrebe zur Führung des flexiblen Kabels zur Verfügung.

Bei einer Weiterbildung der Erfindung weist der Trommelkörper einer der ersten Trommelkörper-Stirnseite entgegengesetzte zweite Trommelkörper-Stirnseite auf, der die hintere Abschlusswand des Trommelträgers vorgelagert ist.

Bei einer Weiterbildung der Erfindung ist an der ersten Leitungsroller-Stirnseite eine elektrische Schnittstelle zur Stromversorgung eines elektrischen Verbrauchers angeordnet, wobei vorzugsweise die elektrische Schnittstelle an der ersten Trommelträger-Stirnseite angeordnet ist.

In besonders bevorzugter Weise ist eine nicht an der Leitungsroller-Stirnseite angeordnete weitere elektrische Schnittstelle vorgesehen, wobei vorzugsweise die weitere elektrische Schnittstelle an der zweiten Leitungsroller-Stirnseite angeordnet ist.

Dies bietet also die Möglichkeit, nicht nur an einer ersten Leitungsroller-Stirnseite elektrische Verbraucher anzuschließen, sondern auch an einer anderen Stelle über eine weitere elektrische Schnittstelle, insbesondere an der zweiten Leitungsroller-Stirnseite, besonders bevorzugt an der Außenseite der hinteren Abschlusswand. Es ergeben sich also auch weitere Anschlussmöglichkeiten für elektrische Verbraucher. Dadurch ist der Leitungsroller leichter und schneller bedienbar, da für den Benutzer nicht auf den Anschluss der elektrische Verbraucher an einer Seite des Leitungsrollers angewiesen ist.

Die elektrischen Verbraucher können also an der ersten Leitungsroller-Stirnseite und/oder an der zweiten Leitungsroller-Stirnseite angeschlossen werden. Dadurch ergibt sich eine große Flexibilität und eine bessere Bedienbarkeit gegenüber herkömmlichen Leitungsrollern.

In besonders bevorzugter Weise weist die elektrische Schnittstelle an der ersten Trommelkörper-Stirnseite und/oder die weitere elektrische Schnittstelle Steckdosen zum Anschluss elektrischer Verbraucher und/oder Anschlussmöglichkeiten zum internen Anschluss am Leitungsroller angeordneter elektrischer Verbraucher, beispielsweise Leuchten, Lampen, Radios etc. auf.

Besonders bevorzugt weist die Schnittstelle und/oder die weitere elektrische Schnittstelle wenigstens eine Datenschnittstelle und/oder wenigstens eine Bus-Schnittstelle und/oder wenigstens eine Lade-Schnittstelle auf.

Es ist also beispielsweise möglich, an der elektrischen Schnittstelle an der ersten Trommelkörper-Stirnseite hauptsächlich Steckdosen zum Anschluss elektrischer Verbraucher, die mit Netzspannung zu versorgen sind, vorzusehen und die weitere elektrische Schnittstelle beispielsweise mit wenigstens einer Daten-Schnittstelle, wenigstens einer Bus-Schnittstelle und/oder wenigstens einer Lade-Schnittstelle auszustatten. Selbstverständlich ist es möglich, an der Schnittstelle an der ersten Trommelkörper-Stirnseite ebenfalls eine Daten-Schnittstelle, Bus-Schnittstelle und Lade-Schnittstelle anzuordnen. Jedenfalls ist die Kombination von Steckdosen, Daten-Schnittstellen, Bus-Schnittstellen und Lade-Schnittstellen beliebig an den beiden elektrischen Schnittstellen möglich. Bei der Bus-Schnittstelle kann es sich beispielsweise um eine USB-Schnittstelle handeln. Bei der Lade-Schnittstelle kann es sich beispielsweise um eine Schnittstelle zur Aufladung von Akkus oder zum Aufladen von Handys, Smartphones oder dergleichen handeln. Die elektrische Schnittstellen sind zum Anschluss verschiedenartigster elektrischer Verbraucher geeignet, beispielsweise Leuchten, Lampen, Elektrowerkzeuge, Radios etc..

Es ist möglich, dass die wenigstens eine Daten-Schnittstelle zur drahtgebundenen oder drahtlosen Datenübertragung eingerichtet ist. Eine drahtlose Datenübertragung kann beispielsweise mittels Funk erfolgen. Es wäre beispielsweise möglich, den Leitungsroller mit einem Funkempfänger auszustatten, über den Daten empfangen werden können, beispielsweise eine Schaltfunktion auslösen können, beispielsweise zum Ein- oder Ausschalten wenigstens einer der elektrischen Schnittstellen.

Bei einer Weiterbildung der Erfindung kann am Trommelträger beispielsweise eine insbesondere bezüglich des Trommelträgers ortsfeste Haspel angeordnet sein, an der sich unabhängig vom Trommelträger eine weitere flexible Leitung, insbesondere weiteres Kabel- auf/oder abwickeln lässt. Das auf die Haspel aufwickelbare Kabel kann über eine am Leitungsroller vorhandene elektrische Schnittstelle elektrisch versorgt werden oder kann ein unabhängiges Verlängerungskabel mit Stecker und Kupplung sein. Die Haspel kann lösbar am Trommelträger befestigt sein, sodass sich eine separat vom Trommelkörper handhabbare Wickelvorrichtung zum Auf- oder Abwickeln von flexiblen Leitungen bereitstellt. Zweckmäßigerweise befindet sich die weitere elektrische Schnittstelle an der Haspel, wodurch diese als vollwertige Kabelhaspel eingesetzt werden kann, an der elektrische Verbraucher anschließbar sind.

Bevorzugte Ausführungsbeispiele der Erfindung sind in der Zeichnung dargestellt und werden im Folgenden näher erläutert. In der Zeichnung zeigen:
- Figur 1: eine perspektivische Darstellung mit Sicht auf die erste Leitungsroller-Stirnseite eines bevorzugten Ausführungsbeispiels des erfindungsgemäßen Leitungsrollers,
- Figur 2: eine perspektivische Darstellung des erfindungsgemäßen Leitungsrollers von Figur 1, mit Sicht auf die zweite Leitungsroller-Stirnseite mit der weiteren elektrischen Schnittstelle,
- Figur 3: eine Seitenansicht auf die zweite LeitungsrollerStirnseite des Leitungsrollers von Figur 1,
- Figur 4: eine Seitenansicht auf die erste LeitungsrollerStirnseite des Leitungsrollers von Figur 1,
- Figur 5: eine Seitenansicht auf den Umfang des Leitungsrollers von Figur 1 mit Trommelkörper ohne flexible Leitung,
- Figur 6: einen Längsschnitt durch die Kabeltrommel entlang der Linie VI-VI in Figur 4,
- Figur 7: eine perspektivische Ansicht eines zweiten Ausführungsbeispiels des erfindungsgemäßen Leitungsrollers, wobei hier das Netzanschlusskabel nicht auf dem Trommelkörper aufgewickelt ist,
- Figur 8: eine Seitenansicht auf eine an der zweiten Leitungsroller-Stirnseite angeordnete Haspel,
- Figur 9: eine Seitenansicht auf den Umfang der Haspel von Figur 8,
- Figur 10: eine perspektivische Ansicht eines dritten Ausführungsbeispiels des erfindungsgemäßen Leitungsrollers mit Sicht auf die erste Leitungsroller-Stirnseite,
- Figur 11: eine Seitenansicht auf die erste LeitungsrollerStirnseite des Leitungsrollers von Figur 10,
- Figur 12: eine perspektivische Ansicht eines vierten Ausführungsbeispiels des erfindungsgemäßen Leitungsrollers,
- Figur 13: eine Seitenansicht auf die erste LeitungsrollerStirnseite des Leitungsrollers von Figur 12,
- Figur 14: eine perspektivische Ansicht eines fünften Ausführungsbeispiels des erfindungsgemäßen Leitungsrollers und
- Figur 15: eine Seitenansicht auf die erste LeitungsrollerStirnseite des Leitungsrollers von Figur 14.

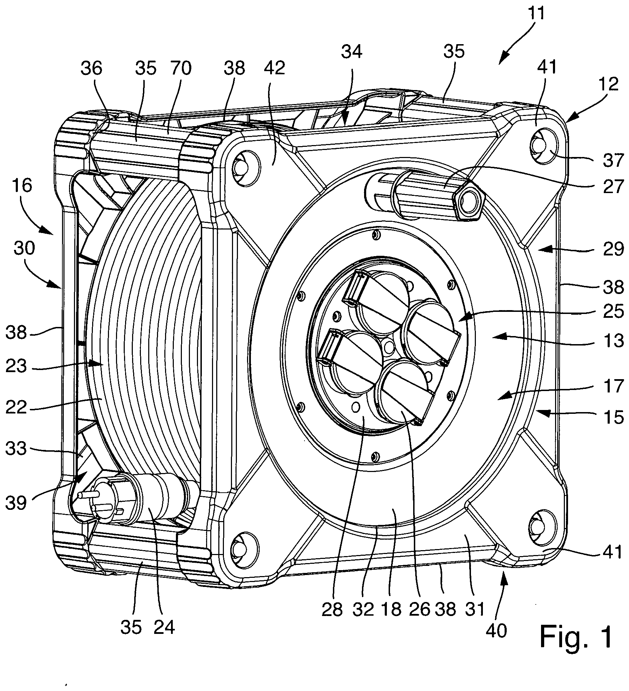

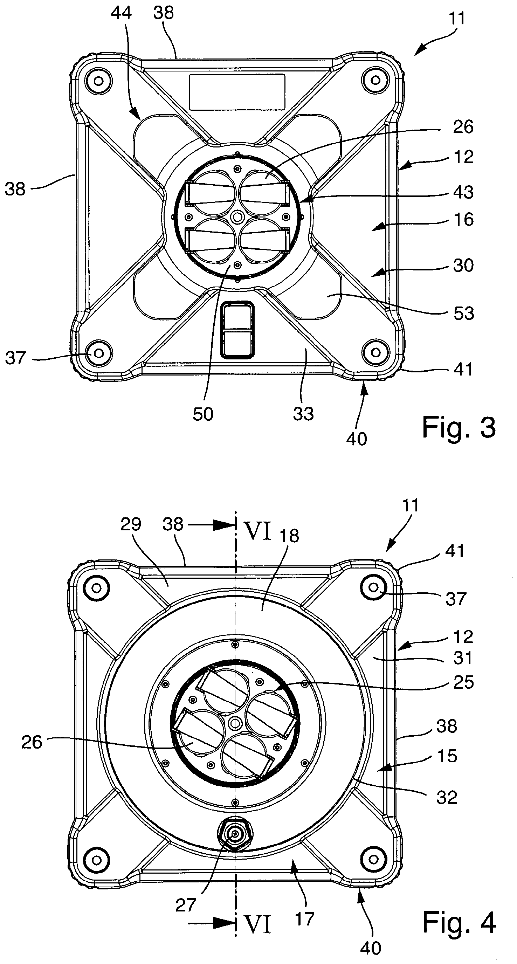

Die Figuren 1 bis 6 zeigen ein erstes Ausführungsbeispiel des erfindungsgemäßen tragbaren Leitungsrollers 11, der im Folgenden beispielhaft in Form einer Kabeltrommel gezeigt und beschrieben ist.

Wie insbesondere in Figur 1 dargestellt, besitzt der Leitungsroller 11 einen gehäuseartigen, nach Art eines Käfigs ausgebildeten Trommelträger 12, an dem ein Trommelkörper 13 um eine Trommelachse 14 drehbar gelagert ist. Der Trommelkörper 13 dient zum Aufwickeln bzw. Abwickeln einer flexiblen Leitung in Form eines elektrischen Kabels.

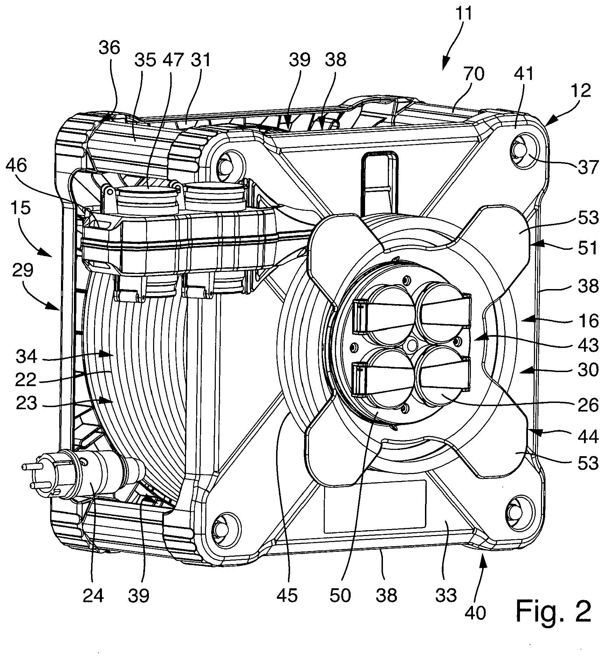

Wie die Zusammenschau der Figuren 1 und 2 zeigt, besitzt der Leitungsroller 11 insgesamt eine erste Leitungsroller-Stirnseite 15, die auch als Vorderseite des Leitungsrollers 11 bezeichnet werden könnte und eine dieser entgegengesetzte zweite Leitungsroller-Stirnseite 16, die auch als Rückseite des Leitungsrollers 11 bzw. der Kabeltrommel bezeichnet werden könnte.

Wie insbesondere in Figur 1 gezeigt, ist der ersten Leitungsroller-Stirnseite 15 eine erste Trommelkörper-Stirnseite 17 zugeordnet. Die erste Trommelkörper-Stirnseite 17 wird von einer Außenseite einer vorderen Trommelscheibe 18 des Trommelkörpers 13 definiert. Zusätzlich zur vorderen Trommelscheibe 18 besitzt der Trommelkörper 13 einen zylindrischen Trommelkern 19 und eine am anderen Ende des Trommelkerns 19, der vorderen Trommelscheibe 18 gegenüberliegende, hintere Trommelscheibe 20. Die beiden Trommelscheiben 18, 20 besitzen gegenüber dem Trommelkern 19 einen deutlich größeren Durchmesser.

Die einander gegenüberliegenden Innenseiten der beiden Trommelscheiben 18, 20 begrenzen einen Wickelraum 21 zum Aufwickeln des Kabels 22. Dabei wird das Kabel 22 beim Aufwickeln an die Mantelfläche des Trommelkerns 19 in Anlage gebracht, bis dieses vollständig mit dem Kabel 22 bedeckt ist, wobei dann anschließend eine zweite Kabellage über die auf dem Trommelkern 19 befindliche erste Kabellage aufgewickelt wird. Insgesamt entsteht dadurch beim Aufwickeln ein Kabelwickel 23, dessen Wickeldurchmesser beim Aufwickeln zunimmt und entsprechend beim Abwickeln abnimmt. Das elektrische Kabel 22 ist einenends zur Kontaktierung nachfolgend noch näher beschriebener Komponenten fest mit dem Trommelkern 19 verbunden und besitzt andererseits im gezeigten Beispielsfall des ersten Ausführungsbeispiels einen Netzstecker 24 zum Anschließen an eine Netz-Steckdose.

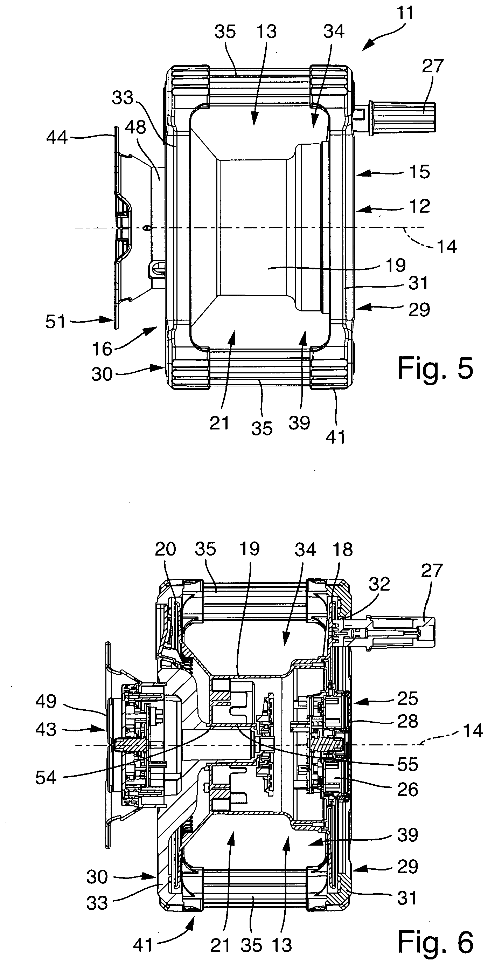

Wie insbesondere in Figur 6 gezeigt, ist der Trommelkörper 13 ein einteiliges Bauteil, d.h. Trommelkern 19 und die beiden Trommelscheiben 18, 20 sind einstückig miteinander verbunden. Zweckmäßigerweise besteht der Trommelkörper 13 aus Kunststoffmaterial. Es ist selbstverständlich auch möglich, den Trommelkörper 13 modulartig aufzubauen, insbesondere indem die beiden Trommelscheiben am Trommelkern lösbar befestigt sind.

Wie insbesondere in Figur 1 gezeigt, befindet sich an der ersten Leitungsroller-Stirnseite 15, beispielshaft an der ersten Trommelkörper-Stirnseite 17, also an der Vorderseite der vorderen Trommelscheibe 18, eine elektrische Schnittstelle 25. Die elektrische Schnittstelle 25 weist im Beispielsfall mehrere Steckdosen 26, beispielsweise vier an der Zahl, zum Anschluss elektrischer Verbraucher auf. Die Steckdosen 26 sind gemäß gezeigtem Ausführungsbeispiel als Schutzkontakt-Steckdosen mit selbstschließenden Deckeln ausgebildet.

An der ersten Trommelkörper-Stirnseite 17 befindet sich ferner ein Drehgriff 27, der von der ersten Trommelkörper-Stirnseite 17 nach außen abragt und der zur Einleitung einer Drehbewegung auf den Trommelkörper 13 zum Auf- oder Abwickeln des Kabels 22 dient. Es ist möglich, den Drehgriff 27 mit einem Gelenk auszustatten, wodurch er im Nichtgebrauchszustand in eine im Wesentlichen parallel zur ersten Trommelkörper-Stirnseite 17 ausgerichtete Nichtgebrauchslage verlagerbar ist. Der Drehgriff 27 ist so ausgestaltet, dass auf ihn gegebenenfalls Verlängerung aufsteckbar ist.

Die Steckdosen 26 der elektrischen Schnittstelle 25 befinden sich an einer Steckdosenplatte 28, die eine Öffnung in der vorderen Trommelscheibe 18 durchsetzt und mit geeigneten Befestigungsmitteln, beispielsweise Schrauben, an den Trommelkern 19 geschraubt ist. Im gezeigten Beispielsfall dreht sich die Steckdosenplatte 28 bei Einleitung einer Drehbewegung auf den Trommelkörper 13 mit. Alternativ könnte die Steckdosenplatte feststehend und über einen Drehkontakt elektrisch verbunden sein.

Wie insbesondere in den Figuren 1 und 2 gezeigt, ist der Trommelträger 12 gehäuseartig ausgebildet und bildet eine Art Käfig für den darin drehbar gelagerten Trommelkörper 13. Der Trommelträger 12 besitzt eine der ersten Leitungsroller-Stirnseite 15 zugeordnete erste Trommelträger-Stirnseite 29 und eine dieser entgegengesetzte, der zweiten Leitungsroller-Stirnseite 16 zugeordnete zweite Trommelträger-Stirnseite 30. Die erste Trommelträger-Stirnseite 29 wird von einer ersten Abschlusswand 31 des Trommelträgers 12 gebildet. Die erste Trommelträger-Stirnseite 29 bildet daher die Vorderseite dieser ersten Abschlusswand 31.

Wie insbesondere in Figur 1 gezeigt, ist die vordere Abschlusswand 31 plattenartig ausgestaltet und besitzt eine zentrale im Querschnitt kreisrunde Öffnung 32, über die die erste Trommelkörper-Stirnseite 17 zugänglich ist, wobei sich der Drehgriff 27 durch die Öffnung 32 nach außen hindurch erstreckt.

Wie insbesondere in Figur 6 gezeigt, besitzt die Öffnung 32 einen kleineren Durchmesser als der Außendurchmesser der vorderen Trommelscheibe 18. Die vordere Abschlusswand 31 ist mithin axial zur Trommelachse 14 nach außen der vorderen Trommelscheibe 18 vorgelagert, die aufgrund ihres größeren Außendurchmessers in Axialrichtung nach außen durch die vordere Abschlusswand 31 fixiert ist. Parallel zur vorderen Abschlusswand 31 ist mit Abstand zu dieser angeordnet eine hintere Abschlusswand 33 vorgesehen, die die zweite Trommelträger-Stirnseite 30 definiert. Die zweite Trommelträger-Stirnseite 30 wird mithin von der Außenseite der hinteren Abschlusswand 33 gebildet.

Wie insbesondere in Figur 1 gezeigt, bilden die beiden Abschlusswände 31, 33 einen Aufnahmeraum 34, in dem der Trommelkörper 13 aufgenommen ist. Die beiden Abschlusswände 31, 33 bilden also eine seitliche Einhausung für den Trommelkörper 13.

Wie weiter in Figur 1 gezeigt, sind die beiden Abschlusswände 31, 33 durch mehrere in Umfangsrichtung der Trommelachse 14 zueinander benachbarte Verbindungsstreben 35 miteinander verbunden.

Im gezeigten Beispielsfall haben die beiden Abschlusswände 31, 33 eine quadratische Form, wobei an den jeweiligen Ecken der Abschlusswände 31, 33 Verbindungsstreben 35 angeordnet sind, die sich jeweils in Axialrichtung der Trommelachse 14 erstrecken und die beiden Abschlusswände 31, 33 miteinander verbinden. Die Verbindungsstreben 35 sind bezüglich den beiden Abschlusswänden 31, 33 als separate Bauteile ausgebildet und werden einerseits an der einen und andererseits an der anderen Abschlusswand 31, 33 mittels geeigneter Befestigungsmittel befestigt. An den Rückseiten der beiden Abschlusswände 31, 33 befinden sich hierzu einander gegenüberliegende, an die Querschnittsform der Verbindungsstreben 35 angepasste Aufnahmeöffnungen 36 zur Aufnahme der Verbindungsstreben 35. Die Verbindungsstreben 35 werden folglich in die beiden zugeordneten Aufnahmeöffnungen 36 an der vorderen und an der hinteren Abschlusswand 31, 33 eingesteckt und mittels Befestigungsmitteln sowohl an der einen als auch an der anderen Abschlusswand 31, 33 befestigt.

Wie insbesondere in Figur 1 gezeigt, befinden sich hierzu sowohl an der ersten Abschlusswand 31 als auch an der zweiten Abschlusswand 33 Montageöffnungen 37, die die zugeordneten Abschlusswände 31, 33 in Axialrichtung durchsetzen, wodurch Befestigungsmittel von den jeweiligen Vorderseiten der Abschlusswände 31, 33 zugeführt und mit den Verbindungsstreben 35 verbunden werden können.

Die beiden Abschlusswände 31, 33 besitzen jeweils an der Außenkontur befindliche Randbereiche 38, die gemeinsam mit zueinander benachbarten Verbindungsstreben 35 fensterartige Zugriffsöffnungen 39 bilden, über die das Kabel 22 herausgeführt werden kann.

Gemäß erstem Ausführungsbeispiel sind also in Umfangsrichtung des Leitungsrollers 11 an jeder Seite Zugriffsöffnungen 39 vorgesehen, über die sich ein Auf- oder Abwickeln des Kabels 22 bewerkstelligen lässt. Eine bevorzugte Zugriffsöffnung 39 gibt es hier nicht, d.h. alle Zugriffsöffnungen 39 sind gleichwertig, sodass es für die Bedienung des Leitungsrollers 11 völlig egal ist, wie er auf dem Untergrund steht. Ferner haben die Verbindungsstreben 35 neben ihrer Hauptaufgabe die beiden Abschlusswände 31, 33 miteinander zu verbinden eine Zusatzaufgabe, nämlich sie dienen der Kabelführung beim Aufwickeln des Kabels 22. Das Kabel 22 kommt beim Aufwickeln mit einer der Verbindungsstreben 35 in Kontakt und wird durch diese geführt, sodass ein gleichmäßiges Aufwickeln des Kabels 22 auf den Trommelkörper 13 stattfindet. Auch hier sind wieder alle Verbindungsstreben 35 funktional gleichwertig, d.h. je nach genutzter Zugriffsöffnung 39 wird eine der Verbindungsstreben 35 als Kabelführung genutzt.

Wie insbesondere in Figur 1 gezeigt, bilden die Randbereiche 38 der beiden Abschlusswände 31, 33 bezüglich der Verbindungsstreben 35 quer zur Trommelachse 14 vorstehende Abstellflächen 40. Die Randbereiche 38 der Abschlusswände 31, 33 sind gegenüber den Verbindungsstreben 35 erhaben, sodass der Leitungsroller 11 auf einer der dadurch gebildeten Abstellflächen 40 standsicher abgestellt werden kann.

Im gezeigten Beispielsfall des ersten Ausführungsbeispiels sind die Randbereiche 38 an allen Seiten der Abschlusswände 31, 33 infolge deren quadratischer Form gleich lang, sodass sowohl gleich große Zugriffsöffnungen 39 als auch gleich große Abstellflächen 40 gebildet werden. Es gibt also keine bevorzugte Abstellfläche 40, d.h. die Kabeltrommel kann auf jeder dieser Abstellflächen 40 abgestellt werden. Der Leitungsroller 11 ist also in jeder Abstelllage funktionell wirksam. Der Leitungsroller 11 kann also mit Ausnahme einer Abstellposition, bei der er mit der ersten Leitungsroller-Stirnseite 15 auf dem Untergrund aufliegt, funktionssicher bedient werden, selbst dann, wenn der Leitungsroller 11 mit der zweiten Leitungsroller-Stirnseite 16 auf dem Untergrund aufliegt, da der Drehgriff 27 in dieser Lage gehandhabt werden kann.

Die Figur 1 zeigt ferner, dass die Eckbereiche 41 der Randbereiche 38 der Abschlusswände 31, 33 gegenüber dem Rest der Randbereiche 38 erhaben sind. Gemäß erstem Ausführungsbeispiel werden die Abstellflächen 40 mithin von den erhabenen Eckbereichen 41 der Randbereiche 38 gebildet. Die vordere Abschlusswand 31 besitzt ferner Versteifungsstreben 42, die ausgehend von der zentralen Öffnung 32 in Richtung der jeweiligen Eckbereiche 41 verlaufen. Daraus ergibt sich eine charakteristische X-Form an der vorderen Abschlusswand 31 des Leitungsrollers 11.

Wie insbesondere in Figur 2 dargestellt, besitzt der Leitungsroller 11 wenigstens eine nicht an der ersten Leitungsroller-Stirnseite 15 angeordnete weitere elektrische Schnittstelle 43. Im Beispielsfall ist die weitere elektrische Schnittstelle 43 an der zweiten Leitungsroller-Stirnseite 16 angeordnet. Im konkreten Beispielsfall befindet sich die weitere elektrische Schnittstelle 43 an der zweiten Trommelträger-Stirnseite 30. Gemäß erstem Ausführungsbeispiel ist die weitere elektrische Schnittstelle 43 im Wesentlichen identisch zur elektrischen Schnittstelle 25 an der ersten Trommelkörper-Stirnseite 17 ausgebildet und besitzt demnach mehrere Steckdosen 26, beispielsweise vier an der Zahl. Es ist selbstverständlich möglich, die weitere elektrische Schnittstelle 43 ganz anders als die elektrische Schnittstelle 25 an der ersten Trommelkörper-Stirnseite 17 auszubilden, beispielsweise dort anstelle von Steckdosen 26 oder zusätzlich zu wenigstens einer Steckdose 26 eine Daten-Schnittstelle und/oder wenigstens eine Bus-Schnittstelle und/oder wenigstens eine Lade-Schnittstelle anzubringen.

Wie insbesondere in den Figuren 2, 3, 8 und 9 gezeigt, ist der Leitungsroller 11 mit einer Haspel 44 zum Aufwickeln einer flexiblen Leitung, insbesondere eines weiteren elektrischen Kabels 45 ausgestattet.

Wie insbesondere in Figur 2 dargestellt, ist es möglich, dass das weitere Kabel 45 als Zuleitung einerseits fest mit der Haspel 44 verbunden ist und andererseits ein Stromverteilerelement 46 aufweist oder als Verlängerungskabel mit Stecker und Kupplung ausgebildet ist. Das Stromverteilerelement 46 kann beispielsweise mit mehreren Steckdosen 47, beispielsweise vier an der Zahl, ausgestattet sein.

Wie insbesondere weiterhin in Figur 2 dargestellt, befindet sich die Haspel 44 an der zweiten Leitungsroller-Stirnseite 16, und zwar ist sie beispielsweise am Trommelträger 12 an dessen zweiten Trommelträger-Stirnseite 30 an der Außenseite der zweiten Abschlusswand 33 befestigt.

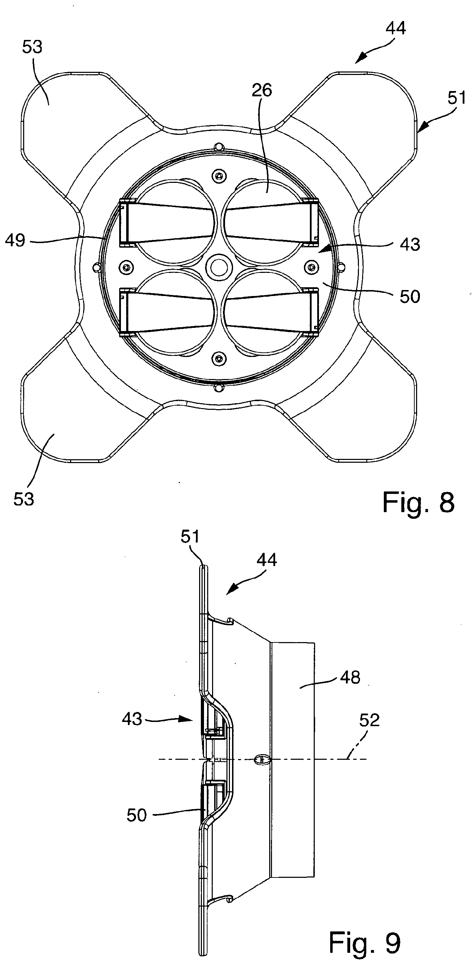

Wie insbesondere in Figur 9 gezeigt, besitzt die Haspel 44 einen zylindrischen Haspelkern 48, der eine zentrale Aufnahmeöffnung 49 zur Aufnahme einer Steckdosenplatte 50 der weiteren elektrischen Schnittstelle 43 aufweist. Die Steckdosenplatte 50 ist am Haspelkern 48 befestigt. Der Haspelkern 48 wiederum wird über geeignete Befestigungsmittel an der zweiten Abschlusswand 33 des Trommelträgers 12 befestigt. Die Haspel 44 besitzt ferner eine Haspelscheibe 51, die im gezeigten Beispielsfall von vier sich in Umfangsrichtung einer Haspelachse 52 verteilt angeordnete Haspelstegen 53 gebildet ist. Die Haspelscheibe 51 ist also nicht als Vollscheibe ausgebildet, sondern wird durch die Haspelstege 53 definiert, wobei im Beispielsfall vier Haspelstege 53 vorgesehen sind, deren an die Außenkanten gelegte Umrisslinie gemeinsam ein Quadrat bilden würden. Insofern liegen sich jeweils zwei Haspelstege 53 diametral bezüglich der Haspelachse 52 gegenüber, wodurch insgesamt eine X-Form entsteht.

Wie insbesondere in Figur 6 dargestellt, ist die Haspel 44 mit ihrem Haspelkern 48 an der zweiten Abschlusswand 33 des Trommelträgers 12 befestigt. An der zweiten Abschlusswand 33 befindet sich im Bereich seiner der zweiten Trommelträger-Stirnseite 30 entgegengesetzten Innenseite ein Lagerzapfen 54, der sich in das Innere des Aufnahmeraums zwischen den beiden Außenabschlusswänden 31, 33 erstreckt. Der Lagerzapfen 54 ist Bestandteil von Lagermitteln für die Drehlagerung des Trommelkörpers 13. Der Trommelkörper 13 besitzt hierzu an seiner hinteren Trommelscheibe 20 eine hülsenartige zylindrische Aufnahme 55, die in den Bereich des Trommelkerns 19 führt. Der Trommelkern 19 ist mit dieser hülsenartigen Aufnahme 55 auf den Lagerzapfen 54 an der zweiten Abschlusswand 33 aufgesteckt und dort drehbar gelagert.

Zur Kontaktierung der weiteren elektrischen Schnittstelle 43 im Bereich der Haspel 44, die sich bei einer Drehbewegung des Trommelkörpers 13 nicht mit dreht, dienen Drehkontakte 60 (Figur 6). Die Kontaktierung der elektrischen Schnittstelle 25 an der ersten Trommelkörper-Stirnseite 17 erfolgt in herkömmlicher Weise über eine interne Verdrahtung im Trommelkern 19 oder kann alternativ über einen Drehkontakt erfolgen.

Insgesamt wird durch den sehr stabilen Trommelträger 12, der den Trommelkörper 13 gehäuseartig einhaust und zweckmäßigerweise aus stabilem Kunststoffmaterial besteht, ein sehr robuster Leitungsroller 11, insbesondere Kabeltrommel, geschaffen, die auch für den Einsatz bei widrigsten Einsatzbedingungen geeignet ist. Die beiden Abschlusswände 31, 33 schützen den Trommelkörper 13 und trotzdem lässt sich die Kabeltrommel bzw. der Leitungsroller 11 einfach bedienen, da ein Zugriff über die fensterartigen Zugriffsöffnungen 39 von allen Seiten her möglich ist.

Ferner werden durch die Verbindungsstreben 35 Kabelführungen beim Aufwickeln des Kabels 22 geschaffen. Ferner lässt sich der Leitungsroller 11, insbesondere die Kabeltrommel leicht transportieren, da jede der Verbindungsstreben 35 als Hand/Traggriff genutzt werden kann. Der robuste Leitungsroller 11, der als eine Art Box ausgebildet ist, lässt sich auch für weitere Zwecke nutzen, nämlich als Sitzgelegenheit, beispielsweise Hocker oder als Montageunterlage bzw. Montageauflage. Beispielsweise wäre es möglich, zwei solcher Leitungsroller 11 mit einem Brett oder einer Diele zu verbinden, die dann als Abstellfläche für Baumaterialien oder gar als Trittfläche benutzt werden kann.

Durch die wenigstens zwei elektrischen Schnittstellen 25, 43 lassen sich verschiedenartigste elektrische Verbraucher anschließen. Neben dem üblichen Anschluss von elektrischen Verbraucher in Form von Elektrowerkzeugen lassen sich beispielsweise auch bei der Ausstattung einer der elektrischen Schnittstellen 25, 43 mit einer Ladestation Akkus aufladen oder es ist über eine geeignete Lade-Schnittstelle die Aufladung von Handys, Smartphones oder dergleichen möglich.

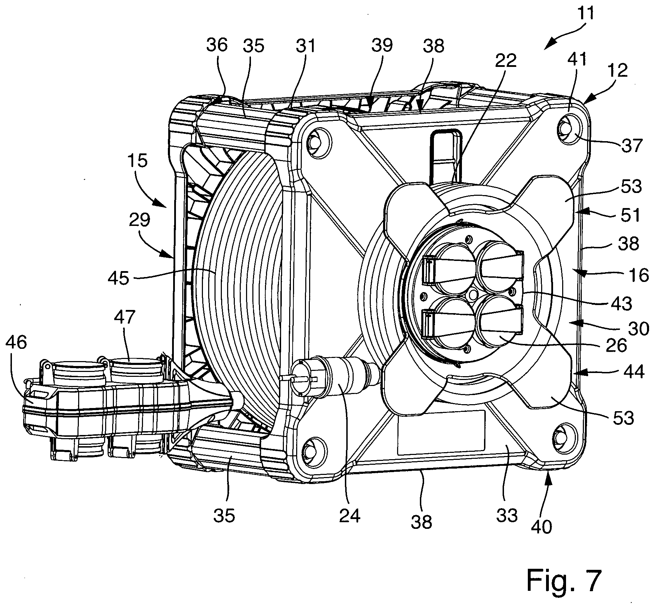

Die Figur 7 zeigt ein zweites Ausführungsbeispiel des erfindungsgemäßen Leitungsrollers 11. Das zweite Ausführungsbeispiel unterscheidet sich von dem zuvor beschriebenen ersten Ausführungsbeispiel dadurch, dass das Zuleitungs-Netzkabel 22 der Haspel 44 zugeordnet ist und dort auf- bzw. abwickelbar ist. Auf dem Trommelkörper 13 befindet sich das weitere Kabel 45 mit dem Stromverteilerelement 46 am Ende, so dass dieser Leitungsroller 11 auch als eine Art Verlängerungs-Leitungsroller genutzt werden kann.

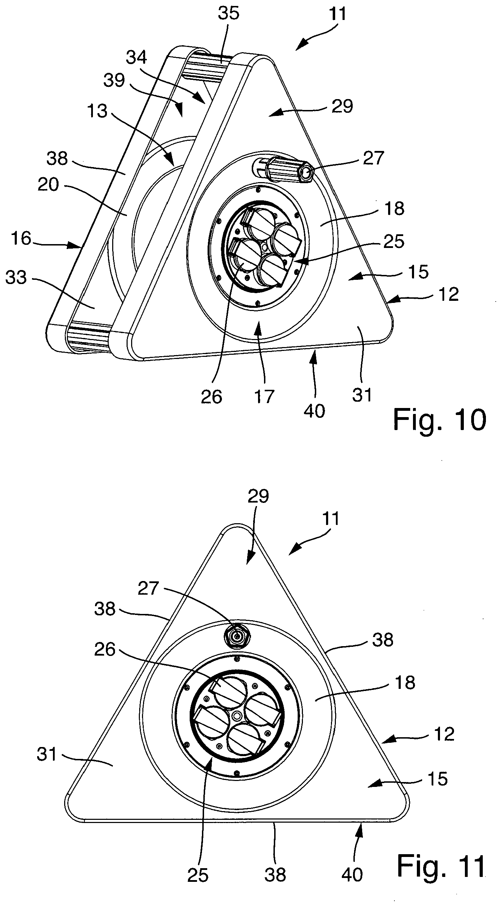

Die Figuren 10 und 11 zeigen ein drittes Ausführungsbeispiel des erfindungsgemäßen Leitungsrollers 11. Das dritte Ausführungsbeispiel unterscheidet sich von den zuvor beschriebenen Ausführungsbeispielen durch die andersartige Form der Abschlusswände 31, 33. Im Gegensatz zu den quadratischen Abschlusswänden 31, 33 der ersten beiden Ausführungsbeispiele, sind hier dreiecksförmige Abschlusswände 31, 33 vorgesehen. Auch hier befinden sich Verbindungsstreben 35 zwischen den beiden Abschlusswände 31, 33, die diese auf Abstand halten. Die Randbereiche 38 der Abschlusswände 31, 33 sind gleichlang, wodurch die Abschlusswände 31, 33 gleichseitige Dreiecke bilden, die gleichgroße Abstellflächen 40 aufweisen. Im Gegensatz zu den zuvor beschriebenen Ausführungsbeispielen werden die Abstellflächen 40 durch die gesamten Randbereiche 38 der Abschlusswände 31, 33 gebildet.

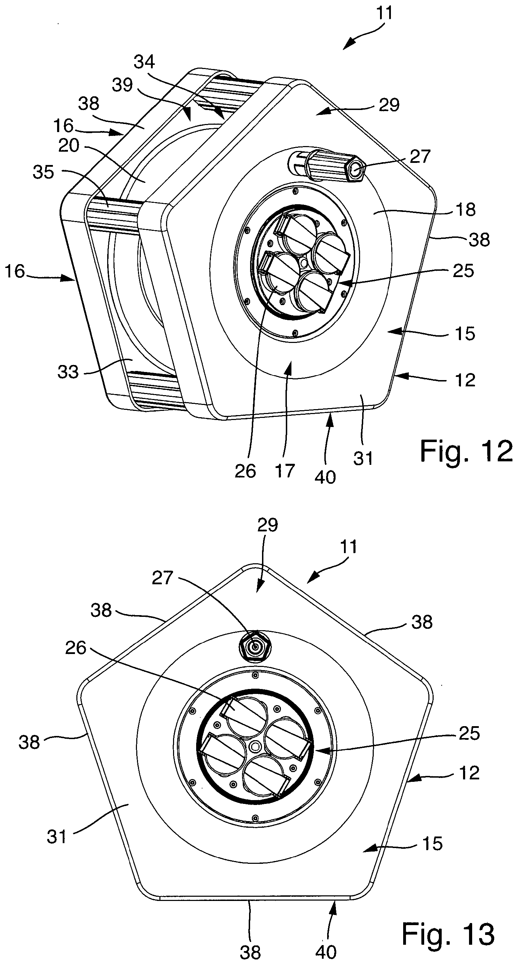

Die Figuren 12 und 13 zeigen ein viertes Ausführungsbeispiel des erfindungsgemäßen Leitungsrollers 11. Das vierte Ausführungsbeispiel unterscheidet sich von den zuvor beschriebenen Ausführungsbeispielen ebenfalls durch die andersartige Form der Abschlusswände 31, 33. Es sind hier fünfeckige Abschlusswände 31, 33 vorgesehen. Zweckmäßigerweise ebenfalls mit jeweils gleichlangen Randbereichen 38, wodurch regelmäßige Fünfecke entstehen. Auch hier bilden die kompletten Randbereiche 38 der Abschlusswände 31, 33 die Abstellflächen 40.

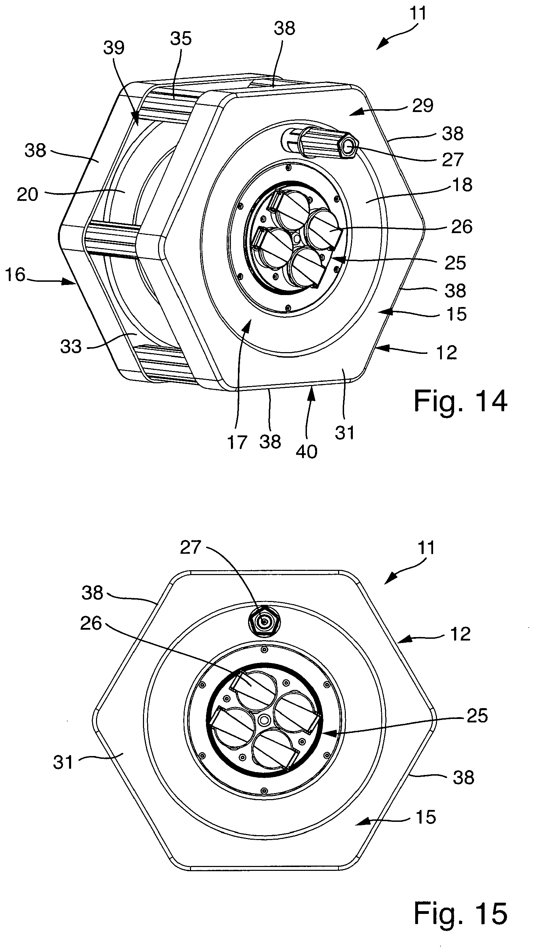

Schließlich zeigen die Figuren 14 und 15 ein fünftes Ausführungsbeispiel des erfindungsgemäßen Leitungsrollers 11. Das fünfte Ausführungsbeispiel unterscheidet sich von den zuvor beschriebenen Ausführungsbeispielen ebenfalls durch die andersartige Gestalt bzw. Form der Abschlusswände 31, 33. Es sind hier sechseckige Abschlusswände 31, 33 vorgesehen. Auch hier werden die Abstellflächen 40 von den kompletten Randbereichen 38 der Abschlusswände 31,33 gebildet.

## Patentansprüche

1. Leitungsroller, insbesondere Kabeltrommel, mit einer ersten Leitungsroller-Stirnseite (15) und einer dieser entgegengesetzten zweiten Leitungsroller-Stirnseite (16), und mit einem Trommelträger (12), der eine vordere und eine hintere Abschlusswand (31, 33) aufweist, die polygonförmig konturiert sind und einen Aufnahmeraum (34) begrenzen, in dem ein um eine Trommelachse (14) drehbar gelagerter Trommelkörper (13) zum Aufwickeln einer flexiblen Leitung, insbesondere Kabel, aufgenommen ist, wobei sich in den Aufnahmeraum (34) ein Lagerkörper (54) hinein erstreckt, auf dem der Trommelkörper (13) drehbar gelagert und der an wenigstens einer der Abschlusswände (31, 33) befestigt ist, und wobei eine der beiden Abschlusswände (31, 33) eine einen Zugriff zur Drehbetätigung des Trommelkörpers (13) gestattende Wandöffnung (32) aufweist, **dadurch gekennzeichnet, dass** die beiden Abschlusswände (31, 33) durch mehrere in Umfangsrichtung der Trommelachse (14) angeordnete Verbindungsstreben (35) miteinander verbunden sind, wobei in Umfangsrichtung der Trommelachse (14) zueinander benachbarte Verbindungsstreben (35) und zugeordnete Randbereiche der Abschlusswände (31, 33) fensterartige Zugriffsöffnungen (39) bilden.

2. Leitungsroller nach Anspruch 1, **dadurch gekennzeichnet, dass** die hintere Abschlusswand (33) des Trommelträgers (12) geschlossen ist.

3. Leitungsroller nach Anspruch 1 oder 2, **dadurch gekennzeichnet, dass** der Lagerkörper (54) zur Lagerung des Trommelkörpers (13) an der hinteren Abschlusswand (33) befestigt ist.

4. Leitungsroller nach einem der vorhergehenden Ansprüche, **dadurch gekennzeichnet, dass** die vordere Abschlusswand (31) die Wandöffnung (32) zur Gestattung des Zugriffs der Drehbetätigung des Trommelkörpers (13) aufweist.

5. Leitungsroller nach einem der vorhergehenden Ansprüche, **dadurch gekennzeichnet, dass** die sich zwischen benachbarten Verbindungsstreben (35) erstreckende Randbereiche gleichlang sind.

6. Leitungsroller nach einem der vorhergehenden Ansprüche, **dadurch gekennzeichnet, dass** die Randbereiche bezüglich der Verbindungsstreben (35) quer zur Trommelachse (14) vorstehende Abstellflächen (40) bilden.

7. Leitungsroller nach einem der vorhergehenden Ansprüche, **dadurch gekennzeichnet, dass** die Verbindungsstreben (35) jeweils eine Gleitfläche (70) zur Führung der flexiblen Leitung beim Aufwickeln auf den Trommelkörper (13) aufweisen.

8. Leitungsroller nach einem der vorhergehenden Ansprüche, **dadurch gekennzeichnet, dass** der Trommelkörper (13) eine erste Trommelkörper-Stirnseite (17) und einer dieser entgegengesetzte zweite Trommelkörper-Stirnseite aufweist, der die hintere Abschlusswand (33) des Trommelträgers (12) vorgelagert ist.

9. Leitungsroller nach einem der vorhergehenden Ansprüche, **dadurch gekennzeichnet, dass** an der ersten Leitungsroller-Stirnseite (15) eine elektrische Schnittstelle (25) zur Stromversorgung eines elektrischen Verbrauchers angeordnet ist, wobei vorzugsweise die elektrische Schnittstelle (25) an der ersten Trommelträger-Stirnseite (29) angeordnet ist.

10. Leitungsroller nach Anspruch 9, **dadurch gekennzeichnet, dass** eine nicht an der ersten Leitungsroller-Stirnseite (15) angeordnete weitere elektrische Schnittstelle (43) vorgesehen ist, wobei vorzugsweise die weitere elektrische Schnittstelle (43) an der zweiten Leitungsroller-Stirnseite (16) angeordnet ist.

11. Leitungsroller nach Anspruch 10, **dadurch gekennzeichnet, dass** die elektrische und/oder weitere elektrische Schnittstelle (25, 43) Steckdosen (26) zum Anschluss elektrischer Verbraucher, beispielsweise Leuchten, Lampen, Elektrowerkzeuge, Radios und/oder wenigstens eine Daten-Schnittstelle und/oder wenigstens eine Bus-Schnittstelle und/oder wenigstens eine USB-Schnittstelle und/oder wenigstens eine Lade-Schnittstelle aufweist.

12. Leitungsroller nach einem der vorhergehenden Ansprüche, **dadurch gekennzeichnet, dass** am Trommelträger (13) eine insbesondere bezüglich des Trommelträgers (13) ortsfeste Haspel (44) angeordnet ist, an der sich unabhängig vom Trommelkörper (13) eine weitere flexible Leitung, insbesondere weiteres Kabel auf- und abwickeln lässt, wobei vorzugsweise die Haspel (44) an der hinteren Abschlusswand (31, 33) des Trommelträgers (12) angeordnet ist.

## Claims

1. Cable reel, in particular cable drum, having a first cable reel end face (15) and a second cable reel end face (16) located opposite thereof, and having a drum support (12), which has a front and a rear end wall (31, 33), which have a polygonal contour and bound a mounting space (34), in which a drum body (13) rotatably mounted about a drum axis (140) for winding up a flexible conduit, in particular cables, is accommodated, wherein a bearing body (54), on which the drum body (13) is rotatably mounted and which is secured to at least one of the end walls (31, 33), extends into the mounting space (34), and wherein one of the two end walls (31, 33) has a wall opening (32) offering access for the rotary operation of the drum body (13), **characterised in that** the two end walls (31, 33) are joined to each other by a plurality of connecting struts (35) arranged in the circumferential direction of the drum axis (14), wherein connecting struts (35) adjacent to one another in the circumferential direction of the drum axis (14) and associated edge areas of the end walls (31, 33) form window-like access openings (39).

2. Cable reel according to claim 1, **characterised in that** the rear end wall (33) of the drum support (12) is closed.

3. Cable reel according to claim 1 or 2, **characterised in that** the bearing body (54) for mounting the drum body (13) is secured to the rear end wall (33).

4. Cable reel according to any of the preceding claims, **characterised in that** the front end wall (31) has the wall opening (32) allowing access for the rotary operation of the drum body (13).

5. Cable reel according to any of the preceding claims, **characterised in that** the edge areas extending between adjacent connecting struts (35) have the same length.

6. Cable reel according to any of the preceding claims, **characterised in that** the edge areas form setting-down surfaces (40) protruding transversely to the drum axis (14) with respect to the connecting struts (35).

7. Cable reel according to any of the preceding claims, **characterised in that** each of the connecting struts (35) has a sliding surface (70) for the guidance of the flexible conduit when winding it onto the drum body (13).

8. Cable reel according to any of the preceding claims, **characterised in that** the drum body (13) has a first drum body end face (17) and a second drum body end face located opposite thereof, in front of which the rear end wall (33) of the drum support (12) is located.

9. Cable reel according to any of the preceding claims, **characterised in that** an electrical interface (25) for supplying power to an electric load is located at the first drum body end face (15), wherein the electrical interface (25) is preferably located at the first drum support end face (29).

10. Cable reel according to claim 9, **characterised in that** a further electrical interface (43), which is not located at the first cable reel end face (15), is provided, wherein the further electrical interface (43) is preferably located at the second cable reel end face (16).

11. Cable reel according to claim 10, **characterised in that** the electrical and/or the further electrical interface (25, 43) has/have sockets for connecting electric loads such as lights, lamps, electric tools, radios and/or at least one data interface and/or at least one bus interface and/or at least one USB interface and/or at least one charging interface.

12. Cable reel according to any of the preceding claims, **characterised in that** a reel (44), which is in particular stationary with respect to the drum support (12) and on which a further flexible conduit, in particular a further cable, can be wound up and unwound independently of the drum body (13), is located on the drum support (12), the reel (44) being preferably located at the rear end wall (31, 33) of the drum support (12).

## Revendications

1. Enrouleur de conducteur, en particulier enrouleur de câble, avec un premier côté frontal d'enrouleur de conducteur (15) et un second côté frontal d'enrouleur de conducteur (16) opposé à celui-ci, et avec un support d'enrouleur (12), qui présente une paroi de terminaison avant et une arrière (31, 33), qui présentent des contours polygonaux et délimitent un espace de logement (34), dans lequel est logé un corps de tambour (13) monté de manière à pouvoir tourner autour d'un axe d'enrouleur (14), pour enrouler un conducteur flexible, en particulier un câble, dans lequel s'étend à l'intérieur de l'espace de logement (34) un corps de palier (54), sur lequel le corps d'enrouleur (13) est monté de manière à pouvoir tourner et qui est fixé au niveau d'au moins une des parois de terminaison (31, 33), et dans lequel une des deux parois de terminaison (31, 33) présente une ouverture de paroi (32) permettant un accès aux fins de l'actionnement en rotation du corps d'enrouleur (13), **caractérisé en ce que** les deux parois de terminaison (31, 33) sont reliées l'une à l'autre par plusieurs entretoises de liaison (35) disposées dans la direction périphérique de l'axe d'enrouleur (14), dans lequel des entretoises de liaison (35) adjacentes les unes par rapport aux autres dans la direction périphérique de l'axe d'enrouleur (14) et des zones de bord associées des parois de terminaison (31, 33) forment des ouvertures d'accès (39) de type fenêtre.

2. Enrouleur de conducteur selon la revendication 1, **caractérisé en ce que** la paroi de terminaison arrière (33) du support d'enrouleur (12) est fermée.

3. Enrouleur de conducteur selon la revendication 1 ou 2, **caractérisé en ce que** le corps de palier (54) est fixé au niveau de la paroi de terminaison arrière (33) pour supporter le corps d'enrouleur (13).

4. Enrouleur de conducteur selon l'une quelconque des revendications précédentes, **caractérisé en ce que** la paroi de terminaison avant (31) présente l'ouverture de paroi (32) autorisant l'accès aux fins de l'actionnement en rotation du corps d'enrouleur (13).

5. Enrouleur de conducteur selon l'une quelconque des revendications précédentes, **caractérisé en ce que** les zones de bord s'étendant entre des entretoises de liaison (35) adjacentes sont de même longueur.

6. Enrouleur de conducteur selon l'une quelconque des revendications précédentes, **caractérisé en ce que** les zones de bord forment par rapport aux entretoises de liaison (35) des surfaces de dépôt (40) faisant saillie de manière transversale par rapport à l'axe d'enrouleur (14).

7. Enrouleur de conducteur selon l'une quelconque des revendications précédentes, **caractérisé en ce que** les entretoises de liaison (35) présentent respectivement une surface de glissement (70) pour guider le conducteur flexible lors de l'enroulement sur le corps d'enrouleur (13).

8. Enrouleur de conducteur selon l'une quelconque des revendications précédentes, **caractérisé en ce que** le corps d'enrouleur (13) présente un premier côté frontal de corps d'enrouleur (17) et un second côté frontal de corps d'enrouleur opposé à celui-ci, en amont duquel est montée la paroi de terminaison arrière (33) du support d'enrouleur (12).

9. Enrouleur de conducteur selon l'une quelconque des revendications précédentes, **caractérisé en ce qu'**une interface (25) électrique pour l'alimentation en courant d'un consommateur électrique est disposée au niveau du premier côté frontal d'enrouleur de conducteur (15), dans lequel de préférence l'interface (25) électrique est disposée au niveau du premier côté frontal de support d'enrouleur (29).

10. Enrouleur de conducteur selon la revendication 9, **caractérisé en ce qu'**une autre interface (43) électrique non disposée au niveau du premier côté frontal d'enrouleur de conducteur (15) est prévue, dans lequel de préférence l'autre interface (43) électrique est disposée au niveau du second côté frontal d'enrouleur de conducteur (16).

11. Enrouleur de conducteur selon la revendication 10, **caractérisé en ce que** l'interface électrique et/ou l'autre interface électrique (25, 43) présentent des prises (26) pour le branchement de consommateurs électriques, par exemple de systèmes d'éclairage, de lampes, d'outils électriques, de radios, et/ou au moins une interface de données et/ou au moins une interface de bus et/ou au moins une interface USB et/ou au moins une interface de charge.

12. Enrouleur de conducteur selon l'une quelconque des revendications précédentes, **caractérisé en ce qu'**est disposé, au niveau du support d'enrouleur (13), un dévidoir (44) stationnaire en particulier par rapport au support d'enrouleur (13), au niveau duquel un autre conducteur flexible, en particulier un autre câble, peut être enroulé et déroulé indépendamment du corps d'enrouleur (13), dans lequel de préférence le dévidoir (44) est disposé au niveau de la paroi de terminaison arrière (31, 33) du support d'enrouleur (12).
